(19) Europäisches Patentamt
European Patent Office
Office européen des brevets

(11) **EP 3 399 155 B1**

(12) **EUROPEAN PATENT SPECIFICATION**

(45) Date of publication and mention
of the grant of the patent:
**09.09.2020 Bulletin 2020/37**

(51) Int Cl.:
*F01D 17/04* *(2006.01)*    *F02C 9/28* *(2006.01)*

(21) Application number: **18170451.1**

(22) Date of filing: **02.05.2018**

(54) **METHOD AND SYSTEM FOR ACCOMMODATING LOSS OF A TORQUE SIGNAL**

VERFAHREN UND SYSTEM ZUM AUSGLEICHEN EINES DREHMOMENTSIGNAL-VERLUSTS

PROCÉDÉ ET SYSTÈME POUR PRENDRE EN COMPTE LA PERTE D'UN SIGNAL DE COUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.05.2017 US 201715584627**

(43) Date of publication of application:
**07.11.2018 Bulletin 2018/45**

(73) Proprietor: **Pratt & Whitney Canada Corp.
Longueuil, Québec J4G 1A1 (CA)**

(72) Inventors:
• **LAMARRE, Sylvain
Longueuil, Québec J4G 1A1 (CA)**
• **CASAVANT, Francois
Longueuil, Québec J4G 1A1 (CA)**
• **ROYER, Jean-Philippe
Longueuil, Québec J4G 1A1 (CA)**

(74) Representative: **Dehns
St. Bride's House
10 Salisbury Square
London EC4Y 8JD (GB)**

(56) References cited:
EP-A1- 3 276 148    US-A- 5 775 089
US-A- 5 775 090    US-A1- 2004 154 385

**Description**

TECHNICAL FIELD

The present disclosure relates generally to engine control, and, more particularly, to detecting and accommodating for loss of a torque signal.

BACKGROUND OF THE ART

Turboshaft and turboprop engines for aircraft often use a torque signal for governing either on torque or on power. In the unlikely event that the torque signal is lost, it is desirable for engine control systems to be designed so that engine control is maintained. The loss of the toque signal could be temporary or permanent and may be the result of a sensor malfunction, physical damage or electrical signal interruptions. Moreover, in some engine hardware configurations the torque signal of the system can be sensitive to aircraft maneuvers.

As such, there is a need for improved systems and methods for detecting and accommodating for loss of a torque signal.

US 5 775 090 A discloses a method in accordance with the preamble of claim 1.

US 2004/154385 A1 discloses a turbine engine differential-pressure torque measurement system.

SUMMARY

The present invention provides a method as set forth in claim 1.

There is also provided a system as set forth in claim 8.

Features of embodiments of the invention are set forth in the dependent claims.

DESCRIPTION OF THE DRAWINGS

Reference is now made to the accompanying figures in which:

Figure 1 is a schematic cross-sectional view of an example engine of an aircraft;

Figure 2 is a flowchart illustrating an example method for accommodating loss of a torque signal of an engine in accordance with an embodiment;

Figure 3 is an example graphical representation of a baseline anticipation curve;

Figure 4 is an example graphical representation of an adjusted anticipation curve offset from the baseline anticipation curve of Figure 3 by an engine rotational speed offset;

Figure 5 is an example graphical representation of an adjusted anticipation curve offset from the baseline anticipation curve of Figure 3 by an actual operating offset;

Figure 6 is an example graphical representation showing an engine deterioration offset determined from the engine rotational speed offset of Figure 4 and the actual operating offset of Figure 5;

Figure 7 is an example graphical representation showing a predicted operating offset determined from the baseline anticipation curve of Figure 3;

Figure 8 is a graphical representation showing an adjusted anticipation curve determined from the predicted operating offset of Figure 7 and the engine deterioration offset of Figure 6; and

Figure 9 is a schematic diagram of an example computing system for implementing the method of Figure 2 in accordance with an embodiment.

It will be noted that throughout the appended drawings, like features are identified by like reference numerals.

DETAILED DESCRIPTION

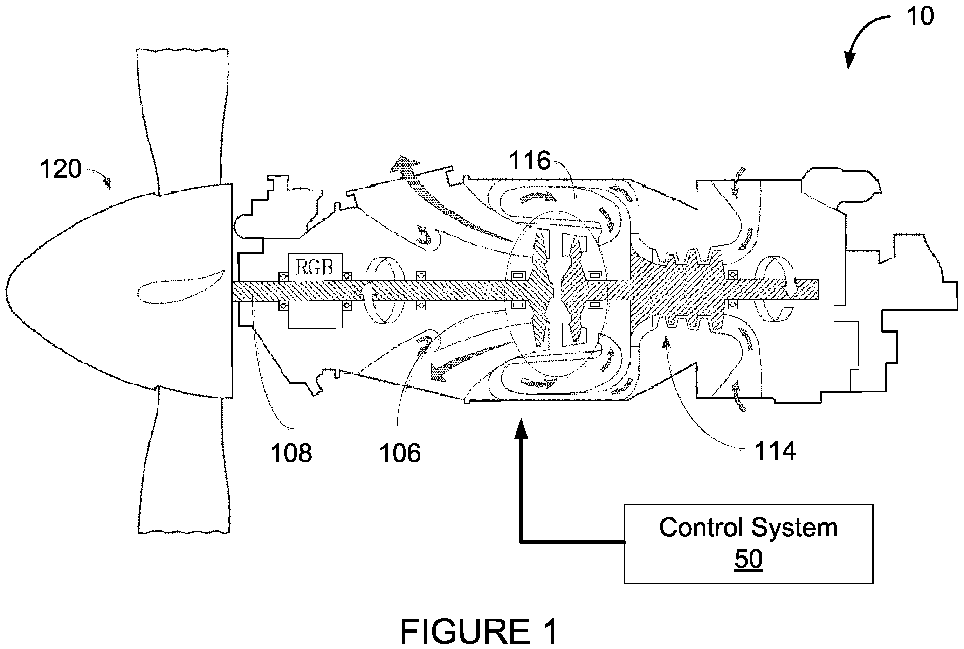

Figure 1 illustrates a gas turbine engine 10 for which loss of a torque signal may be detected and accommodated for using the systems and methods described herein. Engine 10 generally comprises in serial flow communication a propeller 120 attached to a shaft 108 and through which ambient air is propelled, a compressor section 114 for pressurizing the air, a combustor 116 in which the compressed air is mixed with fuel and ignited for generating an annular stream of hot combustion gases, and a turbine section 106 for extracting energy from the combustion gases.

A control system 50 is used to control operation of engine 10. The control system 50 may be configured to receive one or more operational parameter signals regarding operation of the engine 10. The operational parameter signals may, for example, be from one or more sensors (not illustrated) associated with the engine 10. In accordance with an embodiment, an operational parameter signal comprises a torque of the engine 10. The control system 50 may be configured to send one or more control signals to the engine 10 to control the operation of the engine 10. In accordance with an embodiment, a control signal comprises a power setting to set the engine 10 at a specific power under specific ambient and extraction conditions. The control system 50 may implement one or more power setting functions to perform various calculations and/or operations relating to the engine 10. While the control system 50 is illustrated outside of the engine, this is for illustration purposes only - the control system 50 may be internal or external to the engine 10. In a specific and non-limiting example of implementation, the control system 50 may be implemented in an inner gas generator control loop of the engine 10. In another specific and non-limiting example of implementation, the control system 50 may be implemented in an electronic engine controller (EEC) that is part of a full authority digital engine (or electronics) control (FADEC).

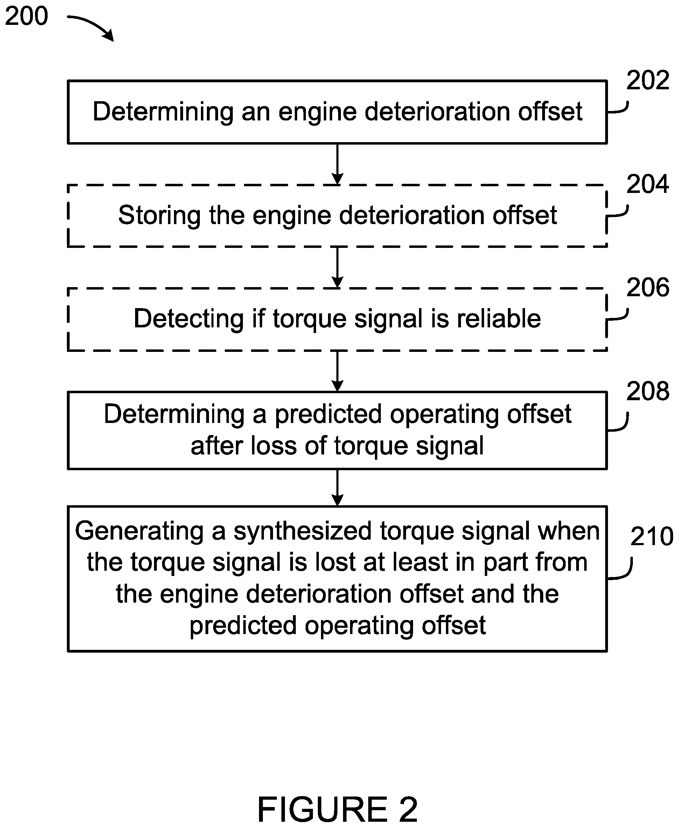

With reference to Figure 2, there is shown a flowchart illustrating an example method 200 for accommodating loss of a torque signal of the engine 10. The method 200 may be implemented by the control system 50 associated with the engine 10.

At step 202, the control system 50 determines an engine deterioration offset (deltaNG_det) while the torque signal of the engine 10 is available. While deltaNG_det is mainly comprised of engine deterioration, in general, deltaNG_det corresponds to a sum of engine deterioration, engine production variability, engine model alignment, installation effects (e.g., outside expectations, etc.), variability (e.g., aircraft to aircraft variability, manufacturing variability, installation variability, etc.) and installation efficiency deterioration or damage (e.g., dirt, foreign object damage, etc.). It may represent the offset in fuel flow applied by the control system 50 to meet the power demands in a specific operating condition. DeltaNG_det is determined by deriving a difference between an engine rotational speed offset (deltaNG(PI)) and an actual operating offset (deltaNG_rat) while the torque signal of the engine is available. For instance, the following equation may be used to determine deltaNG_det:

$$\text{deltaNG\_det} = \text{deltaNG(PI)} - \text{deltaNG\_rat} \quad \text{(Equation 1)}.$$

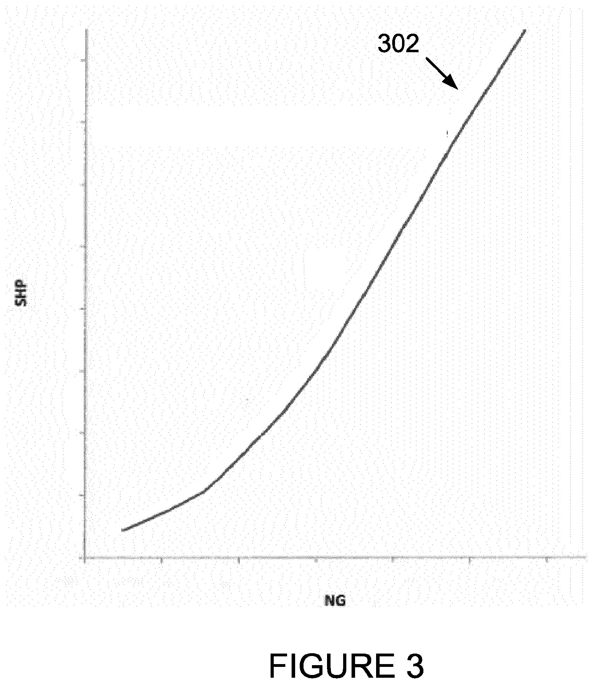

With additional reference to Figure 3, an example of a baseline de-normalized anticipation curve 302 is illustrated, where the x-axis corresponds to engine rotational speed (NG) and the y-axis corresponds to engine power (SHP). Thus, the baseline de-normalized anticipation curve 302 defines a relationship between SHP and NG of the engine 10 at specific ambient conditions. Anticipation curves of the type shown in Figure 3 may be used in the case of a torque failure as a baseline to govern control of the engine 10 based on a derived torque.

While the baseline anticipation curve 302 may be modeled to theoretically correspond with the engine 10, due to various factors such as operating conditions of the engine 10 and/or aircraft selected operations, it should be appreciated that during operation, the engine 10 delivered power schedule may not directly correspond with the anticipation curve 302.

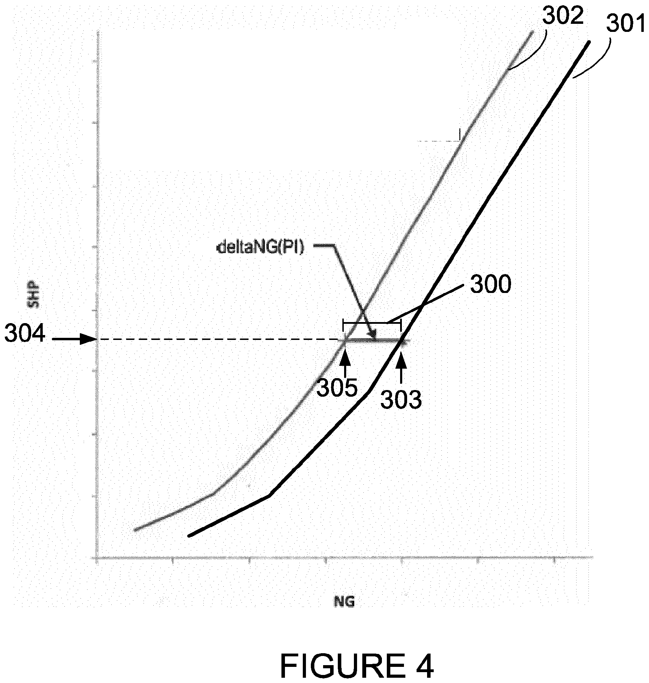

With additional reference to Figure 4, an example of a first adjusted anticipation curve 301 is shown offset from the baseline anticipation curve 302 by deltaNG(PI) 300. As further shown, a marker 305 illustrates a reference speed of rotation, a marker 303 illustrates an actual NG, and a marker 304 illustrates an actual delivered power of the engine 10. The reference speed of rotation 305 corresponds to an expected rotational speed of the engine 10 for the actual delivered power 304 of the engine 10. During steady state operation of the engine 10, an error may occur between the reference (or expected) rotational speed 305 of the engine 10 and the actual NG 303 required of the engine 10. Accordingly, an error between the anticipation curve 302 at the reference speed of rotation 305 and the actual NG 303 may be computed to determine deltaNG(PI) 300. In particular, deltaNG(PI) 300 is determined from a difference between the reference speed of rotation 305 of the engine 10 from the baseline anticipation curve 302 for the actual delivered power 304 of the engine 10 and the actual NG 303 of the engine 10 for the actual delivered power 304 of the engine 10. More specifically, while the torque signal is valid and the engine 10 is governed in a steady state operation, the torque signal may be used to determine the actual delivered power 304 of the engine 10. Then, the actual NG 303 may be compared with the reference NG 305 from the baseline anticipation curve 302 to determine deltaNG(PI) 300 at the actual engine

EP 3 399 155 B1

power 304.

DeltaNG(PI) 300 may be determined on a regular or irregular interval as it may vary with time. The interval for determining deltaNG(PI) 300 may be set to any suitable interval (e.g., daily, hourly, every minute, etc.) while the engine 10 is in a steady state operation. In general, steady state operation of the engine 10 refers to: all parameters of the engine 10 being stable, such as, fuel flow, engine temperature, engine rotational speed, torque, etc.; there being no pilot input to change the conditions of the engine 10; constant extractions, such as, bleed, load, etc.; and constant ambient conditions, such as, altitude, air temperature, etc.

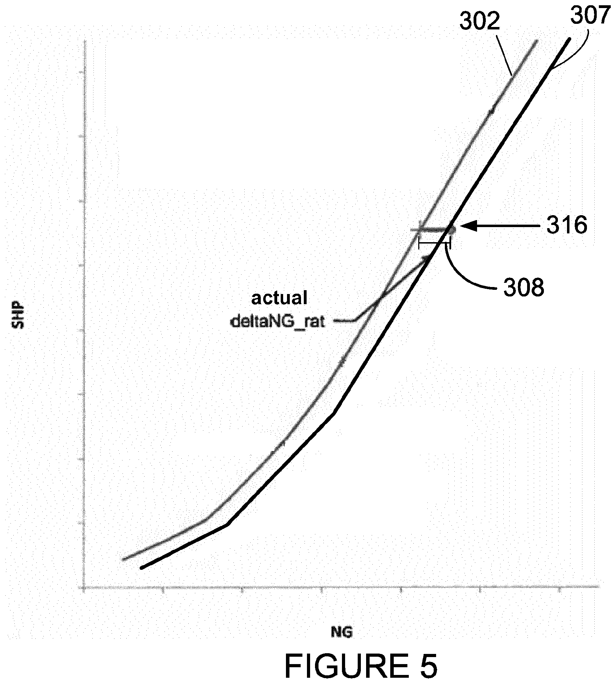

With reference to Figure 5, an example of a second adjusted anticipation curve 307 is shown offset from the baseline anticipation curve 302 by the actual deltaNG_rat 308. A marker 316 is shown to illustrate a maximum rated power of the engine 10 from ambient conditions and extractions. In accordance with an embodiment, the power setting function of the control system 50 are used to derive the actual deltaNG_rat 308. For example, the power setting function of the control system 50 may determine the maximum rated power 316 and corresponding NG of the engine 10. The maximum rated power 316 and corresponding NG of the engine 10 may be determined at a specific moment such as at takeoff or another operating condition where the engine 10 is at a maximum continuous rating. The actual deltaNG_rat 308 is then determined from a difference between NG at the maximum rated power 316 and corresponding NG at the same power from the baseline anticipation curve 302. The determining of the actual deltaNG_rat 308 may be done in real time and may not need the torque signal to be valid.

In accordance with an embodiment, the actual deltaNG_rat 308 may be determined from a difference in NG between the baseline anticipation curve 302 and the second adjusted anticipation curve 307 set at a maximum rated power 316 of the engine 10. That is, the baseline anticipation curve 302 may be offset to derive the second adjusted anticipation curve 307 based on the maximum rated power 316 of the engine 10. In this example, the difference in NG between the baseline anticipation curve 302 and the second adjusted anticipation curve 307 is the actual deltaNG_rat 308. Note that the second anticipation curve 307 need not be determined and is shown herein for illustration purposes.

In accordance with an embodiment, the offsetting of the baseline anticipation curve 302 to derive the second adjusted anticipation curve 307 may be done at a specific moment such as at takeoff or another operating condition where the engine 10 is at a maximum continuous rating. The offsetting of the baseline anticipation curve 302 to determine the second adjusted anticipation curve 307 may be done so that the second adjusted anticipation curve 307 aligns with operating conditions and aircraft selected operations.

The actual deltaNG_rat 308 may be calculated at the maximum rated power 316 of the engine 10, since test data and engine models have shown that a difference in NG may be approximated by being constant over the operating range of the engine 10.

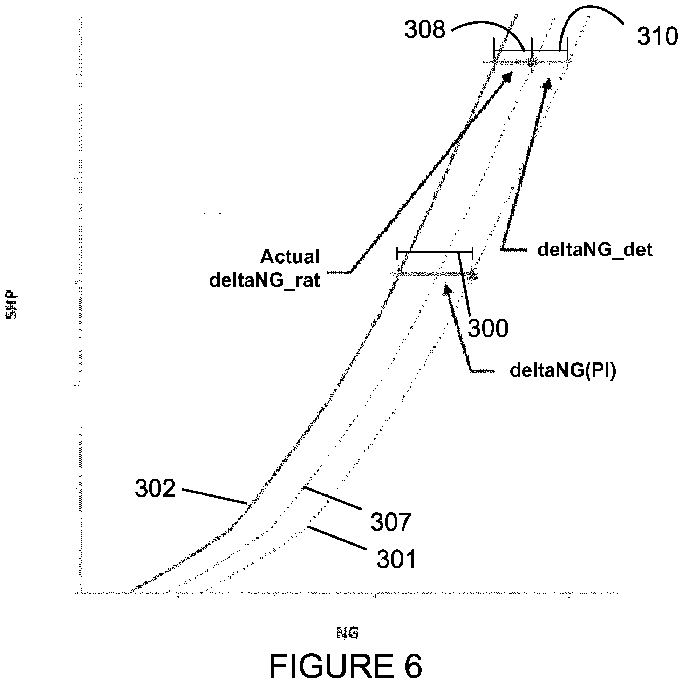

With reference to Figure 6, an example illustrates how deltaNG_det 310 may be determined from deltaNG(PI) 300 and the actual deltaNG_rat 308, while the torque signal is available. As illustrated, deltaNG_det 310 is determined from a difference between deltaNG(PI) 300 and deltaNG_rat 308, while the torque signal of the engine is available (i.e., deltaNG_det = deltaNG(PI) - deltaNG_rat).

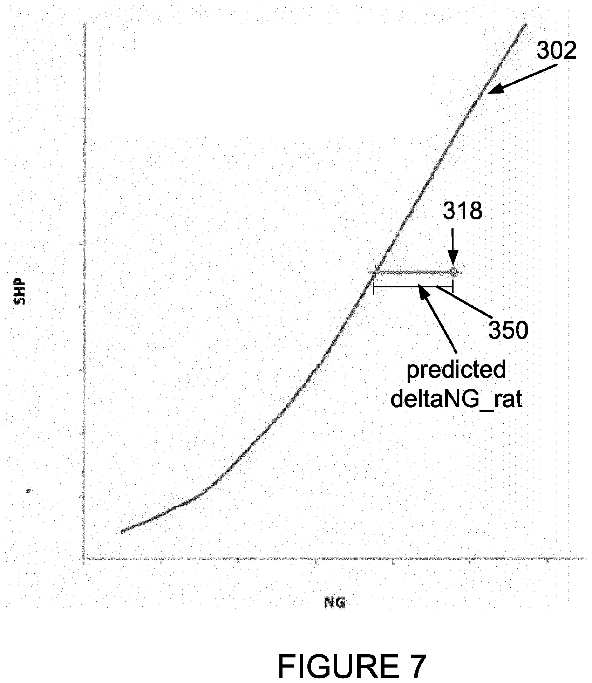

Referring back to Figure 2 at step 208, in the event that the torque signal is lost, the control system 50 determines a predicted deltaNG_rat. With reference now to Figure 7, an example of the de-normalized baseline anticipation curve 302 and a marker 318 showing a predicted NG of the engine 10 for a specific stabilized rated power of the engine 10 are shown. When the torque signal is lost, the predicted deltaNG_rat 350 may be determined from a difference between the baseline anticipation curve 302 and the predicted NG 318 for a specific stabilized rated power determined by the power setting function of the control system 50. For instance, the power setting function may be able to determine the predicted NG 318 that is needed for a specific operating condition. That is, the control system 50 may be able to predict the NG needed to match a specific power requirement for that specific operating condition.

The control system 50 may be able to predict an NG for operating conditions such as bleed, load, inlet door, climb, takeoff, landing, max power, continuous power and/or any other suitable operating condition. The engine operating conditions may be a function of one or more of ambient conditions and aircraft extractions. The ambient conditions may include outside air temperature, altitude, aircraft speed, etc. The aircraft extractions and configuration may include bleed extractions, AGB load extractions, inlet bypass configurations (e.g., bypass door), etc. Accordingly, determining the predicted deltaNG_rat 350 when the torque signal is lost may comprise doing so for a specific operating condition that is associated with ambient conditions and/or aircraft extractions and/or configuration.

If the operating conditions, ambient conditions and/or aircraft extractions do not change before and after the loss of the torque signal, then the actual deltaNg_rat and the predicted deltaNg_rat would typically be the same.

In accordance with an embodiment, when the torque signal is lost, a respective stabilized rated power gets computed for each of a plurality of engine operating conditions. Then, for each engine operating condition, a respective predicted NG may be determined. Each respective predicted NG may be determined by predicting an NG required for the respective stabilized rated power corresponding to a respective operating condition. This may be done by the power setting function of the control system 50. Accordingly, a respective predicted deltaNG_rat may then be computed for each engine operating condition after loss of the torque signal. Each of these respective predicted deltaNG_rat may be computed from a difference in the baseline anticipation curve 302 and the respective predicted NG at a corresponding respective rated power of the engine 10 for that operating condition.

At step 210, the control system 50 generates a synthesized torque signal when the torque signal is lost at least in part from deltaNG_det 310 and the predicted deltaNG_rat 350. When the torque signal is lost, the control system 50 is no longer able to determine deltaNG(PI) based on the torque signal. Accordingly, by rearranging Equation 1, the following equation can be determined:

$$deltaNG(PI) = deltaNG\_rat + deltaNG\_det \quad (Equation\ 2).$$

DeltaNG_det 310 has previously been determined at step 202 and may be used after torque signal loss. The predicted deltaNG_rat has been determined at step 208 while the torque signal is lost. As such, at step 210, a predicted deltaNG(PI) may be determined from Equation 2 and the synthesized torque signal may be determined from the predicted deltaNG(PI).

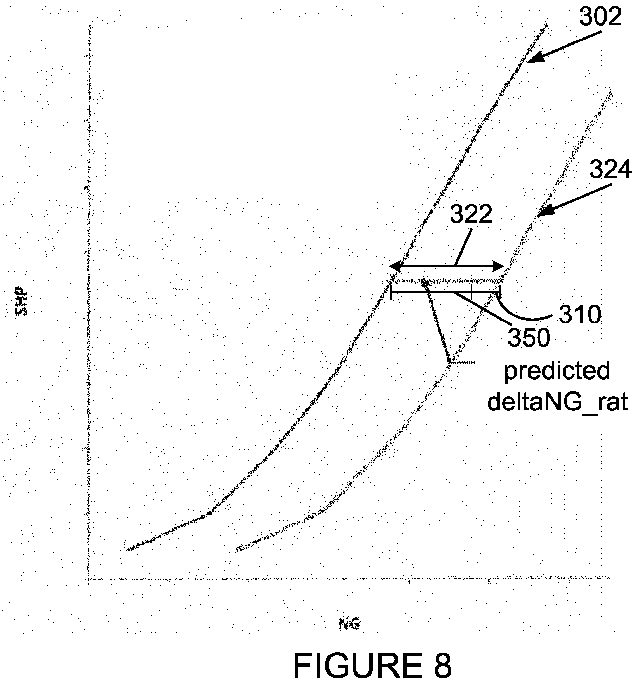

In some embodiments, generating the synthesized torque signal of step 210 comprises applying deltaNG_det 310 and the predicted deltaNG_rat 350 to obtain an adjusted anticipation curve. With additional reference to Figure 8, a third adjusted anticipation curve 324 is shown. The third adjusted anticipation curve 324 in this example is determined by offsetting the baseline anticipation curve 302 from the predicted deltaNG_rat 350 of Figure 7 and deltaNG_det 310 of Figure 6. More specifically, deltaNG_det 310 as determined while the torque signal was available (e.g., step 202) and the predicted deltaNG_rat 350 as determined while the torque signal is lost (e.g., step 208) may be added to the baseline anticipation curve 302 to obtain the third adjusted anticipation curve 324. That is, an offset 322 for adjusting the baseline anticipation curve 302 may be determined. The offset 322 may be determined from the addition of deltaNG_det 310 and the predicted deltaNG_rat 350. It should be appreciated that this offset 322 corresponds to the predicted deltaNG(PI) of Equation 2.

Accordingly, generating the synthesized torque signal may comprise applying deltaNG_det 310 and the predicted deltaNG_rat 350 to the baseline anticipation curve 302 to obtain the third adjusted anticipation curve 324 and using the third adjusted anticipation curve 324 to derive the synthesized torque signal.

In accordance with some embodiments, deltaNG_det 310 is added to each of a respective predicted deltaNG_rat computed for every stabilized operating condition post loss of the torque signal. Then, the addition of deltaNG_det 310 and each of the respective predicted deltaNG_rat for each of the respective stabilized conditions post failure to the baseline anticipation curve 302 defines a respective adjusted anticipation curve. Then, depending on the operating condition that the aircraft is in, a corresponding adjusted anticipation curve for that operating condition may be used.

A specific and non-limiting example of how the predicted deltaNG_rat 350 may be determined is now described. In this example, the baseline anticipation curve 302 indicates that the engine rotational speed should be at 30,000 RPM, the power settings indicates that the rotational speed be at 31,000 RPM; therefore, the predicted deltaNG_rat 350 would be determined as 31,000 RPM - 30,000 RPM = 1,000 RPM. For example, if deltaNG_det 310 with an available torque signal was determined to be 500 RPM, then the baseline anticipation curve 302 may be offset by 1,000 RPM + 500 RPM = 1,500 RPM to arrive at the third adjusted anticipation curve 324.

DeltaNG_det 310, as determined at step 202, may be periodically determined and stored during stabilized engine conditions, while the torque signal is available. In accordance with an embodiment, the method 200 comprises step 204 which comprises storing deltaNG_det 310 while the torque signal of the engine is available. In accordance with a specific and non-limiting example of implementation, deltaNG_det 310 may be the only value required to be stored in case of a torque signal failure (i.e., both deltaNG(PI) 300 and the actual deltaNG_rat 308 are not stored).

A change in engine rotational speed (deltaNG) due to deterioration of the engine 10 may change slowly over a lifetime of the engine 10 unless there is damage to the engine 10. Therefore, deltaNG_det 310 may be assumed to be relatively constant over engine rotational speed range for simplicity. However, in some embodiments, deltaNG_det 310 may be phased out with decreasing speed of rotation to improve accuracy. This is because, deltaNG_det 310 is generally only minimally affected by the operating conditions (e.g., bleed extractions, AGB load extractions, inlet bypass configurations, bypass door, outside air temperature, latitude, aircraft speed, etc.).

In accordance with some embodiments, the method 200 comprises step 206, which comprises detecting if the torque signal is reliable by comparing a measured torque value conveyed by the torque signal to deltaNG(PI) 300 and an allowed tolerance.

The power (SHP) of the engine 10 may be determined by measuring a power lever angle (PLA) of the engine 10 and converting the measured PLA into SHP, then into an NG target using the third adjusted anticipation curve 324. This may be done by the power setting function of the control system 50. There may be other ways to determine the power of the engine 10, for example by directly measuring it with sensors or calculating it based on other engine parameters.

In the event that the torque signal is lost and the method 200 is applied, cockpit torque bugs may display the torque defined by the third adjusted anticipation curve 324 based on the current NG value. Other forms of alert or notification signals may be provided as well.

While in the examples described in relation to Figures 3 to 8 the anticipation curves are denormalized, the anticipation curves may be denormalized or normalized. Normalized refers to the anticipation curves being adjusted to temperature, pressure and/or altitude conditions. As such, the baseline anticipation curve may be a denormalized baseline anticipation or a normalized baseline anticipation depending on the practical implementation. Accordingly, there may be multiple baseline anticipation curves for different temperatures and/or ranges of temperature. Furthermore, while examples are shown for the calculation of deltaNG_det, deltaNG(PI) and deltaNG_rat in relation to a change in an engine rotational speed, in other embodiments where normalized anticipation curves are used, such calculations may be in relation to a normalized engine rotational speed (NgN). Thus, in some embodiments, the engine 10 may be modeled based on the relationship between a normalized engine rotation speed (NgN) and a normalized engine power.

It should be appreciated that in the embodiments described herein, the difference between the third adjusted anticipation curve 324 and the baseline anticipation curve 302 is constant throughout the operating range of the engine 10. For specific implementations, to improve the low power accuracy, deltaNG_det and deltaNG_rat may be scaled down by a normalized engine rotational speed so that delivered power of the engine 10 substantially merges with the baseline anticipation curve 302 at low powers. In accordance with another embodiment, generating the synthesized torque signal comprises scaling down deltaNG_det and deltaNG_rat by a normalized engine rotational speed to generate the synthesized torque signal.

The method 200 may be applied to accommodate for a permanent loss of the torque signal and/or a temporary loss of the torque signal. For example, the temporary loss of the torque signal may occur during a time where the aircraft and/or engine conditions are changing and the method 200 may accommodate for such temporary loss of the torque signal.

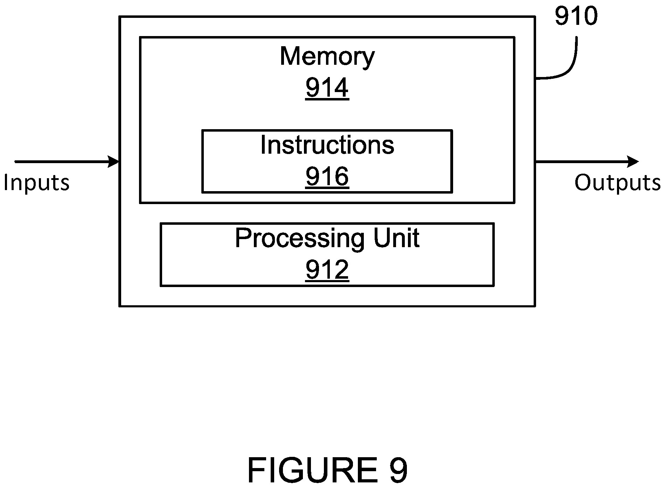

With reference to Figure 9, the method 200 may be implemented by a computing device 910, comprising a processing unit 912 and a memory 914 which has stored therein computer-executable instructions 916. The processing unit 912 may comprise any suitable devices configured to implement the system such that instructions 916, when executed by the computing device 910 or other programmable apparatus, may cause the functions/acts/steps of the method 200 as described herein to be executed. The processing unit 912 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 914 may comprise any suitable known or other machine-readable storage medium. The memory 914 may comprise non-transitory computer readable storage medium, for example, but not limited to, an electronic, magnetic, optical, electromagnetic, infrared, or semiconductor system, apparatus, or device, or any suitable combination of the foregoing. The memory 914 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 914 may comprise any storage means (e.g., devices) suitable for retrievably storing machine-readable instructions 916 executable by processing unit 912.

The methods and systems for detection and accommodation described herein may be implemented in a high level procedural or object oriented programming or scripting language, or a combination thereof, to communicate with or assist in the operation of a computer system, for example the computing device 910. Alternatively, the methods and systems for detection and accommodation may be implemented in assembly or machine language. The language may be a compiled or interpreted language. Program code for implementing the methods and systems for detection and accommodation may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for detection and accommodation may also be considered to be implemented by way of a non-transitory computer-readable storage medium having a computer program stored thereon. The computer program may comprise computer-readable instructions which cause a computer, or in some embodiments the processing unit 912 of the computing device 910, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The control system may comprise power setting logic to implement the power setting functions and the power setting logic may require modifications (e.g., extra memory requirements) to accommodate embodiments described herein.

The terms "first", "second" and "third" used with "adjusted anticipation" is used to identify the different anticipation curves in this document and figures for example purposes and are not intended to be limiting.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the methods and systems for controlling operation of a first propeller of an aircraft may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A method for accommodating loss of a torque signal of a gas turbine engine (10) comprising generating a synthesized torque signal when the torque signal is lost, **characterised in that** the method further comprises:

   determining an engine deterioration offset (310) while the torque signal of the engine (10) is available, wherein determining the engine deterioration offset (310) comprises determining a difference between an engine rotational speed offset (300) and an actual operating offset (308), the engine rotational speed offset (300) being determined from a difference between a reference speed of rotation (305) of the engine (10) from a baseline anticipation curve (302) for an actual delivered power (304) of the engine and an actual speed of rotation (303) of the engine (10), the actual operating offset (308) being determined from a difference between the rotational speed of the engine (10) at a maximum rated power (316) and the corresponding rotational speed of the engine (10) from the baseline anticipation curve (302), and the baseline anticipation curve (302) defining a relationship between engine power (304) and engine rotational speed (303);
   determining a predicted operating offset (350), when the torque signal is lost, from the difference between the baseline anticipation curve (302) and an engine rotational speed (303) determined by a power setting of the engine (10) at an actual rated power of the engine (10); and
   generating the synthesized torque signal when the torque signal is lost at least in part from the engine deterioration offset (310) and the predicted operating offset (350).

2. The method of claim 1, wherein generating the synthesized torque signal comprises applying the engine deterioration offset (310) and the predicted operating offset (350) to the baseline anticipation curve (302) for the engine (10) to obtain an adjusted anticipation curve (301;307;324).

3. The method of claim 2, wherein determining the predicted operating offset (350) when the torque signal is lost comprises determining the predicted operating offset (350) for a specific operating condition that is associated with ambient conditions and aircraft extractions.

4. The method of claim 2 or 3, wherein determining the engine deterioration offset (310) comprises determining the actual operating offset (308) while the torque signal of the engine (10) is available from a difference in speed of rotation between the baseline anticipation curve (302) and the adjusted anticipation curve (307) set at a maximum rated power (316) of the engine (10).

5. The method of any preceding claim, further comprising storing the engine deterioration offset (310) while the torque signal of the engine (10) is available.

6. The method of any preceding claim, further comprising detecting if the torque signal is reliable, and wherein the synthesized torque signal is generated when the torque signal is found to be unreliable.

7. The method of any preceding claim, wherein generating the synthesized torque signal comprises scaling the engine deterioration offset (310) and the predicted operating offset (350) by a normalized engine rotational speed to generate the synthesized torque signal.

8. A system (50;910) for accommodating loss of a torque signal of a gas turbine engine (10), the system comprising:

   at least one processing unit (912); and
   a non-transitory computer-readable memory (914) having stored thereon program instructions (916) which when executed by the at least one processing unit (912) perform the steps of the method of any preceding claim.

9. The system of claim 8, wherein the engine deterioration offset (310) is stored in the non-transitory computer-readable memory while the torque signal of the engine is available.


**Patentansprüche**

1. Verfahren zum Ausgleichen eines Drehmomentsignalverlusts eines Gasturbinentriebwerks (10), umfassend das Erzeugen eines synthetisierten Drehmomentsignals, wenn das Drehmomentsignal verloren gegangen ist, **dadurch gekennzeichnet, dass** das Verfahren ferner Folgendes umfasst:

   Bestimmen einer Verschiebung (310) der Abnutzung des Triebwerks, während das Drehmomentsignal des Triebwerks (10) verfügbar ist, wobei das Bestimmen der Verschiebung (310) der Abnutzung des Triebwerks das Bestimmen einer Differenz zwischen einer Drehzahlverschiebung (300) des Triebwerks und einer tatsächlichen Betriebsverschiebung (308) umfasst, wobei die Drehzahlverschiebung (300) des Triebwerks aus einer Differenz zwischen einer Referenzdrehzahl (305) des Triebwerks (10) aus einer Ausgangserwartungskurve (302) für eine tatsächliche gelieferte Leistung (304) des Triebwerks und einer tatsächlichen Drehzahl (303) des Triebwerks (10) bestimmt wird, wobei die tatsächliche Betriebsverschiebung (308) aus einer Differenz zwischen der Drehzahl des Triebwerks (10) bei einer maximalen Nennleistung (316) und der entsprechenden Drehzahl des Triebwerks (10) aus der Ausgangserwartungskurve (302) bestimmt wird, und die Ausgangserwartungskurve (302) eine Beziehung zwischen der Triebwerksleistung (304) und der Drehzahl (303) des Triebwerks definiert;
   bestimmen einer vorhergesagten Betriebsverschiebung (350), wenn das Drehmomentsignal verloren gegangen ist, aus der Differenz zwischen der Ausgangserwartungskurve (302) und einer Drehzahl (303) des Triebwerks, die durch eine Leistungseinstellung des Triebwerks (10) bei einer tatsächlichen Nennleistung des Triebwerks (10) bestimmt wird;
   erzeugen des synthetisierten Drehmomentsignals, wenn das Drehmomentsignal verloren gegangen ist, zumindest teilweise aus der Verschiebung (310) der Abnutzung des Triebwerks und der vorhergesagten Betriebsverschiebung (350).

2. Verfahren nach Anspruch 1, wobei das Erzeugen des synthetisierten Drehmomentsignals das Anwenden der Verschiebung (310) der Abnutzung des Triebwerks und der vorhergesagten Betriebsverschiebung (350) auf die Ausgangserwartungskurve (302) für das Triebwerk (10) umfasst, um eine angepasste Erwartungskurve (301;307;324) zu erhalten.

3. Verfahren nach Anspruch 2, wobei das Bestimmen der vorhergesagten Betriebsverschiebung (350), wenn das Drehmomentsignal verloren gegangen ist, das Bestimmen der vorhergesagten Betriebsverschiebung (350) für eine spezifische Betriebsbedingung umfasst, die mit Umgebungsbedingungen und den Absaugungen in Luftfahrzeugen assoziiert ist.

4. Verfahren nach Anspruch 2 oder 3, wobei das Bestimmen der Verschiebung (310) der Abnutzung des Triebwerks das Bestimmen der tatsächlichen Betriebsverschiebung (308) umfasst, während das Drehmomentsignal des Triebwerks (10) aus einer Differenz der Drehzahl zwischen der Ausgangserwartungskurve (302) und der angepassten Erwartungskurve (307), eingestellt bei einer maximalen Nennleistung (316) des Triebwerks (10), verfügbar ist.

5. Verfahren nach einem der vorhergehenden Ansprüche, ferner umfassend das Speichern der Verschiebung (310) der Abnutzung des Triebwerks, während das Drehmomentsignal des Triebwerks (10) verfügbar ist.

6. Verfahren nach einem der vorhergehenden Ansprüche, ferner umfassend das Detektieren, ob das Drehmomentsignal zuverlässig ist, und wobei das synthetisierte Drehmomentsignal erzeugt wird, wenn festgestellt wird, dass das Drehmomentsignal unzuverlässig ist.

7. Verfahren nach einem der vorhergehenden Ansprüche, wobei das Erzeugen des synthetisierten Drehmomentsignals das Skalieren der Verschiebung (310) der Abnutzung des Triebwerks und der vorhergesagten Betriebsverschiebung (350) durch eine normierte Triebwerksdrehzahl umfasst, um das synthetisierte Drehmomentsignal zu erzeugen.

8. System (50;910) zum Ausgleichen eines Drehmomentsignalverlusts eines Gasturbinentriebwerks (10), wobei das System Folgendes umfasst:

mindestens eine Verarbeitungseinheit (912); und
einen nicht flüchtigen computerlesbaren Speicher (914), auf dem Programmanweisungen (916) gespeichert sind, durch die, wenn sie von der mindestens einen Verarbeitungseinheit (912) ausgeführt werden, die Schritte des Verfahrens nach einem der vorhergehenden Ansprüche ausgeführt werden.

9. System nach Anspruch 8, wobei die Verschiebung (310) der Abnutzung des Triebwerks in dem nicht flüchtigen computerlesbaren Speicher gespeichert ist, während das Drehmomentsignal des Triebwerks verfügbar ist.

## Revendications

1. Procédé pour compenser la perte d'un signal de couple d'un moteur à turbine à gaz (10) comprenant la génération d'un signal de couple synthétisé lorsque le signal de couple est perdu, **caractérisé en ce que** le procédé comprend en outre :

la détermination d'un décalage de détérioration de moteur (310) pendant que le signal de couple du moteur (10) est disponible, dans lequel la détermination du décalage de détérioration de moteur (310) comprend la détermination d'une différence entre un décalage de vitesse de rotation de moteur (300) et un décalage de fonctionnement réel (308), le décalage de vitesse de rotation de moteur (300) étant déterminé par une différence entre une vitesse de rotation de référence (305) du moteur (10) d'une courbe d'anticipation de base (302) pour une puissance délivrée réelle (304) du moteur et une vitesse de rotation réelle (303) du moteur (10), le décalage de fonctionnement réel (308) étant déterminé à partir d'une différence entre la vitesse de rotation du moteur (10) à une puissance nominale maximale (316) et la vitesse de rotation correspondante du moteur (10) par rapport à la courbe d'anticipation de base (302), et la courbe d'anticipation de base (302) définissant une relation entre la puissance du moteur (304) et la vitesse de rotation de moteur (303) ;
la détermination d'un décalage de fonctionnement prédit (350), lorsque le signal de couple est perdu, à partir de la différence entre la courbe d'anticipation de base (302) et une vitesse de rotation de moteur (303) déterminée par un réglage de puissance du moteur (10) à une puissance nominale réelle du moteur (10) ; et
la génération du signal de couple synthétisé lorsque le signal de couple est perdu au moins en partie à partir du décalage de détérioration de moteur (310) et du décalage de fonctionnement prédit (350).

2. Procédé selon la revendication 1, dans lequel la génération du signal de couple synthétisé comprend l'application du décalage de détérioration de moteur (310) et du décalage de fonctionnement prévu (350) à la courbe d'anticipation de base (302) du moteur (10) pour obtenir une courbe d'anticipation ajustée (301 ; 307 ; 324) .

3. Procédé selon la revendication 2, dans lequel la détermination du décalage de fonctionnement prévu (350) lorsque le signal de couple est perdu comprend la détermination du décalage de fonctionnement prévu (350) pour une condition de fonctionnement spécifique qui est associée aux conditions ambiantes et aux extractions d'aéronefs.

4. Procédé selon la revendication 2 ou 3, dans lequel la détermination du décalage de détérioration de moteur (310) comprend la détermination du décalage de fonctionnement réel (308) tandis que le signal de couple du moteur (10) est disponible à partir d'une différence de vitesse de rotation entre la courbe d'anticipation de base (302) et la courbe d'anticipation ajustée (307) fixée à une puissance nominale maximale (316) du moteur (10) .

5. Procédé selon une quelconque revendication précédente, comprenant en outre le stockage du décalage de détérioration de moteur (310) pendant que le signal de couple du moteur (10) est disponible.

6. Procédé selon une quelconque revendication précédente, comprenant en outre le fait de détecter si le signal de couple est fiable, et dans lequel le signal de couple synthétisé est généré lorsque le signal de couple s'avère non fiable.

7. Procédé selon une quelconque revendication précédente, dans lequel la génération du signal de couple synthétisé comprend la mise à l'échelle du décalage de détérioration de moteur (310) et du décalage de fonctionnement prédit (350) par une vitesse de rotation de moteur normalisée pour générer le signal de couple synthétisé.

8. Système (50 ; 910) pour compenser la perte d'un signal de couple d'un moteur à turbine à gaz (10), le système comprenant :

au moins une unité de traitement (912) ; et
une mémoire non transitoire lisible par ordinateur (914) sur laquelle sont stockées des instructions de programme (916) qui, lorsqu'elles sont exécutées par l'au moins une unité de traitement (912), exécutent les étapes du procédé selon une quelconque revendication précédente.

9. Système selon la revendication 8, dans lequel le décalage de détérioration de moteur (310) est stocké dans la mémoire non transitoire lisible par ordinateur pendant que le signal de couple du moteur est disponible.

FIGURE 1

EP 3 399 155 B1

200

202
Determining an engine deterioration offset

204
Storing the engine deterioration offset

206
Detecting if torque signal is reliable

208
Determining a predicted operating offset after loss of torque signal

210
Generating a synthesized torque signal when the torque signal is lost at least in part from the engine deterioration offset and the predicted operating offset

FIGURE 2

FIGURE 3

FIGURE 4

FIGURE 5

EP 3 399 155 B1

FIGURE 6

FIGURE 7

FIGURE 8

FIGURE 9

EP 3 399 155 B1

**REFERENCES CITED IN THE DESCRIPTION**

**Patent documents cited in the description**

- US 5775090 A

- US 2004154385 A1